(19) Europäisches Patentamt
European Patent Office
Office européen des brevets

(11) EP 4 130 083 A1

(12) **EUROPEAN PATENT APPLICATION**

(43) Date of publication:
**08.02.2023 Bulletin 2023/06**

(21) Application number: **21189449.8**

(22) Date of filing: **03.08.2021**

(51) International Patent Classification (IPC):
***C08G 18/48*** *(1974.07)* ***C08F 283/00*** *(1974.07)*
***C08F 290/06*** *(1995.01)* ***C08F 290/14*** *(1995.01)*
***C08G 18/67*** *(1974.07)* ***C08G 18/76*** *(1974.07)*
***C08L 75/08*** *(1974.07)* ***C08L 75/14*** *(1990.01)*

(52) Cooperative Patent Classification (CPC):
(C-Sets available)
**C08G 18/7664; C08F 283/00; C08F 290/067; C08G 18/4829; C08G 18/4845; C08G 18/672; C08L 75/08; C08L 75/14;** C08G 2120/00; C08J 2375/14 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude K12**
**51365 Leverkusen (DE)**

(54) **POLYOL COMPOSITION**

(57) The present invention relates to a polyol composition, a polyurethane reaction system comprising the polyol composition, and use thereof in the preparation of polyurethane composites.

EP 4 130 083 A1

(52) Cooperative Patent Classification (CPC): (Cont.)

C-Sets
**C08F 283/00, C08F 222/102, C08F 220/10;**
**C08F 290/067, C08F 222/102**

## Description

### Technical Field

The present invention relates to a polyol composition, a polyurethane reaction system comprising the polyol composition, and use thereof in the preparation of polyurethane composites.

### Background Technology

The polyol composition in a polyurethane reaction system is very important, and different polyol compositions may bring different physical properties and reaction products. Particularly when used for the production of large parts such as those for wind blades, ships and the like, it is important whether the polyol composition can bring about the satisfactory pot-life, the uniform and stable filling, and the like.

CN104031229A discloses a polyurethane modified resin for windmill blades and a preparation process thereof, wherein the modified resin is obtained by reacting a polyester resin, a hydroxyl-containing acrylate and an isocyanate and then diluting with unsaturated monomers.

CN104974502A discloses a polyurethane composite material comprising a polyurethane resin matrix and a reinforcing material, wherein the polyurethane resin matrix is prepared by a polyurethane reaction system comprising: A) an isocyanate component comprising one or more organic polyisocyanates; and B) an isocyanate-reactive component.

CN108727550A discloses a photosensitive resin and its application, the photosensitive resin includes a crystallized polyurethane acrylate oligomer, a reactive diluent and a photoinitiator.

Despite the above disclosures, there is still a great need in the art for more suitable polyol compositions to meet the various needs.

### Summary of the Invention

One aspect of the present invention is to provide a polyol composition, comprising:

b1) at least one polyol;
b2) at least one compound having the structure of formula (I)

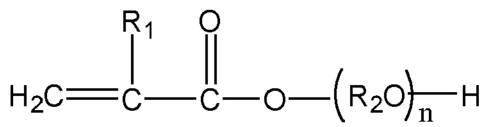

I ,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;
b3) at least one hydroxyl-free multifunctional (meth)acrylate.

Preferably, said b1) component is selected from one or more organic polyols having the functionality of 1.7-6, and the hydroxyl value of 150-1100 mgKOH/g (Test Method ISO 14900-2017).

Preferably, the content of said b1) component is 9-60 wt%, preferably 10-60 wt%, based on the total weight of the polyurethane reaction system.

Preferably, the component B2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

Preferably, the content of said b2) component is 3-34 wt%, preferably 5-33 wt%, based on the total weight of the polyurethane reaction system.

Preferably, said hydroxyl-free multifunctional (meth)acrylate refers to a substance being free of hydroxyl groups but containing two or more (meth)acrylic acid ester groups in the molecule structure.

Preferably, said b3) component is selected from ethylene glycol di(meth)acrylate, propylene glycol di(meth)acrylate, butylene glycol di(meth)acrylate, 1,6-hexylene glycol di(meth)acrylate, diethylene glycol di(meth)acrylate, triethylene glycol di(meth)acrylate, dipropylene glycol di(meth)acrylate, tripropylene glycol di(meth)acrylate, trimethylolpropane tri(meth)acrylate, 1,2,3-glycerol tri(meth)acrylate, pentaerythritol tetra(meth)acrylate or any combination thereof.

Preferably, the content of said b3) component is 1.8-42 wt%, preferably 2.2-36.1 wt%, more preferably 2.47-20.1 wt%, particularly preferably 2.8-18.8 wt%, more particularly preferably 3.8-17.6 wt%, based on the total weight of the polyol composition.

Surprisingly, we have found that the polyol composition of the present invention, comprising a hydroxyl-free multifunctional (meth)acrylate, and a polyol compatible thereto and a compound having the structure of formula (I), can extend the pot-life of the corresponding polyurethane reaction system, thereby enabling sufficient pot-life to be obtained when preparing polyurethane resins or composites. Therefore, a uniform and perfect filling of the prepared parts, in particular large parts, for example, those for wind blades, ships and the like can be achieved. Thereby the finished product rate and the production efficiency are increased, the waste of raw materials is reduced or avoided, and being more environment-friendly is realized.

Another aspect of the present invention is to provide a polyurethane reaction system, comprising:

Component A), comprising: at least one polyisocyanate;

Component B), comprising:

b1) at least one polyol;

b2) at least one compound having the structure of formula (I)

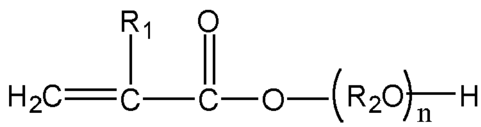

I

,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;

b3) at least one hydroxyl-free multifunctional (meth)acrylate;

Component C), a free radical reaction initiator.

Preferably, said b1) component is selected from one or more organic polyols having the functionality of 1.7-6, and the hydroxyl value of 150-1100 mgKOH/g (Test Method ISO 14900-2017).

Preferably, the content of said b1) component is 10-60 wt%, preferably 20-60 wt%, based on the total weight of the polyurethane reaction system.

Preferably, the component b2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

Preferably, the content of said b2) component is 3-34 wt%, preferably 5-33 wt%, based on the total weight of the polyurethane reaction system.

Preferably, said b3) component is selected from ethylene glycol di(meth)acrylate, propylene glycol di(meth)acrylate, butylene glycol di(meth)acrylate, 1,6-hexylene glycol di(meth)acrylate, diethylene glycol di(meth)acrylate, triethylene glycol di(meth)acrylate, dipropylene glycol di(meth)acrylate, tripropylene glycol di(meth)acrylate, trimethylolpropane tri(meth)acrylate, 1,2,3-glycerol tri(meth)acrylate, pentaerythritol tetra(meth)acrylate or any combination thereof.

Preferably, the content of said b3) component is 1-18 wt%, preferably 1.2-16 wt%, more preferably 1.3-9.6 wt%, particularly preferably 1.5-9 wt%, more particularly preferably 2-8.5 wt%, based on the total weight of the polyurethane reaction system.

Preferably, the polyurethane reaction system has a pot-life at 35°C of ≥68 minutes, preferably ≥70 minutes, more preferably ≥72 minutes, particularly preferably ≥80 minutes.

Preferably, compared to the pot-life at 35°C of a polyurethane reaction system without b3), the pot-life at 35°C of said polyurethane reaction system with b3) is increased by ≥5%, preferably ≥10%, more preferably ≥15%.

Preferably, the polyurethane reaction system has a linear shrinkage rate of≤0.95%, preferably≤0.90%, more preferably≤0.80% (Test Method ISO2577-2007).

We have surprisingly found that the polyurethane reaction system of the present invention comprising the polyol

composition of components b1) to b3), the isocyanate and the free radical reaction initiator not only can produce polyurethane products with excellent quality, but also can bring about longer pot-life, and for preparing polyurethane products, especially polyurethane products with larger size such as wind blades, ships and the like, can gain enough pot-life for uniform filling and curing of the products.

A further aspect of the present invention is to provide use of the polyurethane reaction system according to the present invention in manufacture of fan wind blades.

The polyurethane reaction system comprises:

Component A), comprising: at least one polyisocyanate;

Component B), comprising:

b1) at least one polyol;

b2) at least one compound having the structure of formula (I)

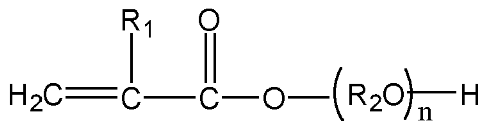

I

,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;

b3) at least one hydroxyl-free multifunctional (meth)acrylate;

Component C), a free radical reaction initiator.

Preferably, the content of said b3) component is 1-18 wt%, preferably 1.2-16 wt%, more preferably 1.3-9.6 wt%, particularly preferably 1.5-9 wt%, more particularly preferably 2-8.5 wt%, based on the total weight of the polyurethane reaction system.

Preferably, the polyurethane reaction system has a pot-life at 35°C of ≥68 minutes, preferably ≥70 minutes, more preferably ≥72 minutes, particularly preferably ≥80 minutes.

Preferably, compared to the pot-life at 35°C of a polyurethane reaction system without b3), the pot-life at 35°C of said polyurethane reaction system with b3) is increased by ≥5%, preferably ≥10%, more preferably ≥15%.

A further aspect of the present invention is to provide a polyurethane resin, which is prepared by the reaction of the polyurethane reaction system according to the present invention.

A further aspect of the present invention is to provide a process for preparing a polyurethane composite, which is to prepare the polyurethane composite by mixing the following components:

The polyurethane reaction system according to the present invention; and,

At least one reinforcing material.

Preferably, the polyurethane composite is prepared through the pultrusion process, the winding molding process, the hand lay-up molding process, the vacuum infusion process, the spray molding process or a combination thereof.

Preferably, the reinforcing material of the present invention refers to a material including glass fiber, carbon nanotube, carbon fiber, polyester fiber, natural fiber, aromatic polyamide fiber, nylon fiber, basalt fiber, boron fiber, silicon carbide fiber, asbestos fiber, crystal whisker, hard particles, metal fiber or a combination thereof.

Preferably, the process comprises the coexistence of the free radical polymerization reaction and the addition polymerization reaction between isocyanate groups and hydroxyl groups.

Preferably, the polyurethane reaction system has a pot-life at 35°C of ≥68 minutes, preferably ≥70 minutes, more preferably ≥72 minutes, particularly preferably ≥80 minutes.

Preferably, compared to the pot-life at 35°C of a polyurethane reaction system without b3), the pot-life at 35°C

of said polyurethane reaction system with b3) is increased by ≥5%, preferably ≥10%.

Preferably, the polyurethane reaction system has a linear shrinkage rate of≤0.95%, preferably≤0.90%, more preferably≤0.80% (Test Method ISO2577-2007).

A further aspect of the present invention is to provide a polyurethane composite, which is prepared with the process for preparing the polyurethane composite according to the present invention.

Preferably, the content of the reinforcing material in the polyurethane composite is ≥40 wt%, preferably ≥45 wt%, more preferably 50-88 wt%, based on the total weight of the polyurethane composite.

A further aspect of the present invention is to provide a polyurethane product, comprising the polyurethane resin according to the present invention, characterized in that the polyurethane product is selected from cable trays, frames of doors, windows and curtain walls, frames of ladders, tent poles or pipes, anti-glare shields, floors, sucker rods, telegraph poles and cross arms, guardrails, grills, architectural sectional materials, container sectional materials and plates, bike racks, fishing rods, cable cores, insulator core rods, antenna housings, single-layer or sandwiched continuous plates, wind blades and parts thereof, enclosures for wind-driven generators, ship blades, ship shells, internal and external decorations and shells of vehicles, radar housings, structural part materials of mechanical equipment, decorations and structural parts of buildings and bridges, preferably wind blades or parts thereof, enclosures for wind-driven generators, more preferably blade shells, shear webs, spar caps, main spars, auxiliary spars and blade roots of wind blades.

## Detailed description

I. Polyol Composition

The polyol composition provided by the present invention comprises:

b1) at least one polyol;

b2) at least one compound having the structure of formula (I)

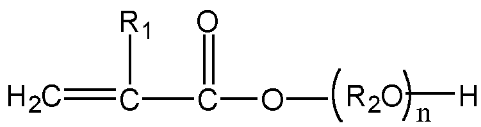

I ,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;

b3) at least one hydroxyl-free multifunctional (meth)acrylate.

Preferably, said hydroxyl-free multifunctional (meth)acrylate refers to a substance being free of hydroxyl group but containing two or more (meth)acrylic acid ester groups in the molecule structure.

II. Polyurethane Reaction System

The polyurethane reaction system of the present invention comprises:

Component A), comprising: at least one polyisocyanate;

Component B), comprising:

b1) at least one polyol;

b2) at least one compound having the structure of formula (I)

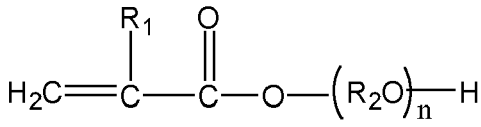

I ,

Wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;

b3) at least one hydroxyl-free multifunctional (meth)acrylate;

Component C), a free radical reaction initiator.

In embodiments of the present invention, the organic polyisocyanate may be any aliphatic, cycloaliphatic, or aromatic isocyanate known to be used in the preparation of polyurethanes. Its example includes, but is not limited to: toluene diisocyanate (TDI), diphenylmethane diisocyanate (MDI), polyphenylmethane polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), p-xylylene diisocyanate (XDI), tetramethyldimethylene diisocyanate (TMXDI) and their polymers or a combination thereof. The functionality of the isocyanate that can be used in the present invention is preferably 2.0-3.5, particularly preferably 2.1-2.9. The viscosity of the isocyanate is preferably 5-700 mPa*S, particularly preferably 10-300 mPa*S, measured at 25°C according to DIN 53019-1-3.

When used in the present invention, the organic polyisocyanate comprises an isocyanate dimer, an isocyanate trimer, an isocyanate tetramer, an isocyanate pentamer, or a combination thereof.

In a preferred embodiment of the present invention, the isocyanate component a) is selected from diphenylmethane diisocyanate (MDI), polyphenylmethane polyisocyanate (pMDI), and their polymers, prepolymers or a combination thereof.

The terminated-isocyanate may be also used as isocyanate component a), which may be prepared by the reaction of an excessive amount of an organic polyisocyanate or an organic polyisocyanate mixture with a polyol compound. Those of ordinary skill in the art are familiar with these compounds and their preparation methods.

Preferably, the NCO content of the organic polyisocyanate of the present invention is 20-33 wt%, preferably 25-32 wt%, particularly preferably 30-32 wt%. The NCO content is determined by GB/T12009.4-2016.

Preferably, the organic polyisocyanates can also be used in the form of polyisocyanate prepolymers. These polyisocyanate prepolymers can be obtained by reacting an excess of the above-mentioned organic polyisocyanate with a compound having at least two isocyanate-reactive groups at a temperature of for example 30-100°C, preferably about 80°C. The NCO content of the polyisocyanate prepolymer of the present invention is 20-33 wt%, preferably 25-32 wt%. The NCO content is determined by GB/T12009.4-2016.

Preferably, the polyisocyanate content of the present invention is ≤65 wt%, preferably≤60 wt%, more preferably 30-45 wt% based on the total weight of the polyurethane reaction system.

In embodiments of the present invention, the isocyanate-reactive component contains one or more organic polyols b1). The content of the organic polyol is 9-60 wt%, based on 100 wt% of the total weight of the polyurethane reaction system. The organic polyol may be an organic polyol conventionally used in the art for preparing a polyurethane, and comprises, but is not limited to: polyether polyol, polyethercarbonate polyol, polyester polyol, polycarbonate diol, polymer polyol, vegetable oil-based polyol, or a combination thereof.

The polyether polyol can be prepared by known processes, for example, obtained by reacting an olefin oxide with a starter in the presence of a catalyst. The catalyst is preferably, but not limited to, an alkaline hydroxide, an alkaline alkoxide, antimony pentachloride, boron fluoride etherate, or a mixture thereof. The olefin oxide is preferably, but not limited to, tetrahydrofuran, ethylene oxide, propylene oxide, 1,2-butylene oxide, 2,3-butylene oxide, styrene oxide, or a mixture thereof, particularly preferably ethylene oxide and/or propylene oxide. The starter is preferably, but not limited to, polyhydroxyl compounds or polyamine compounds, the polyhydroxyl compound is preferably, but not limited to, water, ethylene glycol, 1,2-propylene glycol, 1,3-propylene glycol, diethylene glycol, trimethylolpropane, glycerol, bisphenol A, bisphenol S or a mixture thereof, and the polyamine compound is preferably, but not limited to, ethylene diamine, propylene diamine, butylene diamine, hexamethylene diamine, diethylene triamine, toluylene diamine or a mixture thereof.

The polyethercarbonate polyol may also be used in the present invention. The polyethercarbonate polyol can

be prepared by adding carbon dioxide and alkylene oxide on an active hydrogen-containing starter by means of a double metal cyanide catalyst.

Said polyester polyol is prepared by reacting dicarboxylic acid or dicarboxylic anhydride with polyol. The dicarboxylic acid is preferably, but not limited to, an aliphatic carboxylic acid having 2-12 carbon atoms, and the aliphatic carboxylic acid having 2-12 carbon atoms is preferably, but not limited to, succinic acid, malonic acid, glutaric acid, adipic acid, suberic acid, azelaic acid, sebacic acid, lauryl acid, maleic acid, fumaric acid, phthalic acid, isophthalic acid, terephthalic acid, or a mixture thereof. The dicarboxylic anhydride is preferably, but not limited to, phthalic anhydride, tetrachlorophthalic anhydride, maleic anhydride, or a mixture thereof. The polyol that is reacted with dicarboxylic acid or dicarboxylic anhydride is preferably, but not limited to ethylene glycol, diethylene glycol, 1,2-propylene glycol, 1,3-propylene glycol, dipropylene glycol, 1,3-methylpropylene glycol, 1,4-butylene glycol, 1,5-pentylene glycol, 1,6-hexylene glycol, neopentyl glycol, 1,10-decanediol, glycerol, trimethylolpropane, or a mixture thereof. The polyester polyol also comprises a polyester polyol prepared from lactone. The polyester polyol prepared from lactone is preferably, but not limited to ε-caprolactone. Preferably, the polyester polyol has a molecular weight of 200-3000 and a functionality of 2-6, preferably 2-4, and more preferably 2-3.

The polycarbonate diol can be prepared by reacting a diol with a dihydrocarbyl carbonate or a diaryl carbonate or phosgene. The diol is preferably, but not limited to, 1,2-propylene glycol, 1,3-propylene glycol, 1,4-butylene glycol, 1,5-pentylene glycol, 1,6-hexylene glycol, diethylene glycol, trioxymethylene diol, or a mixture thereof. The dihydrocarbyl carbonate or the diaryl carbonate is preferably, but not limited to, diphenyl carbonate.

When used in the present invention, the vegetable oil-based polyol includes a vegetable oil, a vegetable oil polyol or a modified product thereof. The vegetable oil is a compound prepared from an unsaturated fatty acid and glycerol, or is an oil and fat extracted from fruits, seeds and germs of plants, and is preferably, but not limited to, peanut oil, soyabean oil, linseed oil, castor oil, rapeseed oil, and palm oil. The vegetable oil polyol is a polyol initiated from one or more vegetable oils. The starter for synthesizing the vegetable oil polyol includes, but is not limited to, soybean oil, palm oil, peanut oil, low erucic acid rapesed oil, and castor oil. A hydroxyl group can be introduced into the starter of the vegetable oil polyol through the process such as cracking, oxidation, or transesterification, and then the corresponding vegetable oil polyol can be prepared by a process for preparing an organic polyol well known to those skilled in the art.

Those skilled in the art are familiar with the methods for measuring the hydroxyl value, such as those disclosed in Houben Weyl, Methoden der Organischen Chemie, vol. XIV/2 Makromolekulare Stoffe, p. 17, Georg Thieme Verlag; Stuttgart 1963. The entire content of the document is incorporated herein by reference.

When used in the present invention, unless otherwise specified, the functionality and the hydroxyl value of the organic polyol refer to the average functionality and the average hydroxyl value.

In embodiments of the present invention, the isocyanate-reactive component further contains one or more compounds b2) having the structure of formula (I)

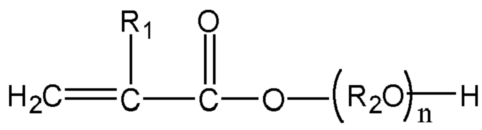

I ,

Wherein, $R_1$ is selected from hydrogen, methyl or ethyl; $R_2$ is selected from an alkylene group having 2-6 carbon atoms; n is an integral number selected from 1-6.

In a preferred embodiment of the present invention, $R_2$ is selected from ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, 2,2-bis(4-phenylene)-propane, 1,4-dimethylenebenzene, 1,3-dimethylenebenzene, 1,2-dimethylenebenzene.

In a preferred embodiment of the present invention, the component b2) is selected from: hydroxyethyl methacrylate, hydroxypropyl methacrylate, hydroxybutyl methacrylate, hydroxyethyl acrylate, hydroxypropyl acrylate, hydroxybutyl acrylate or a combination thereof.

The compound of formula (I) may be prepared by conventional methods in the art, for example may be prepared by the esterification reaction of (meth)acrylic anhydride or (meth)acrylic acid, (meth)acryloyl halide compounds and HO-$(R_2O)_n$-H. Those skilled in the art are familiar with these preparation methods, for example, as explained in "Manual of Polyurethane Raw Materials and Additives" (Liu Yijun, published on 1st April, 2005), Chapter III, and "Polyurethane Elastomer" (Liu Houjun, published in August 2012), Chapter II. The entire contents of these documents are incorporated herein by reference.

The hydroxyl-free multifunctional (meth)acrylate of the present invention refers to a substance being free of hydroxyl groups but containing two or more (meth)acrylic acid ester groups in the molecule structure.

Preferably, said hydroxyl-free multifunctional (meth)acrylate, the b3) component is selected from ethylene glycol di(meth)acrylate, propylene glycol di(meth)acrylate, butylene glycol di(meth)acrylate, 1,6-hexylene glycol di(meth)acrylate, diethylene glycol di(meth)acrylate, triethylene glycol di(meth)acrylate, dipropylene glycol di(meth)acrylate, tripropylene glycol di(meth)acrylate, trimethylolpropane tri(meth)acrylate, 1,2,3-glycerol tri(meth)acrylate, pentaerythritol tetra(meth)acrylate or any combination thereof.

Preferably, the content of said b3) component is 1.8-42 wt%, preferably 2.2-36.1 wt%, more preferably 2.47-20.1 wt%, particularly preferably 2.8-18.8 wt%, more particularly preferably 3.8-17.6 wt%, based on the total weight of the polyol composition.

After repeated experiments, we surprisingly found that the polyol composition of the present invention, which comprises a hydroxyl-free multifunctional (meth)acrylate and a polyol compatible thereto, and a compound having the structure of formula (I), can extend the pot-life of the corresponding polyurethane reaction system, and simultaneously the linear shrinkage rate can also be increased. However, if the linear shrinkage rate exceeds a certain value, the requirement for a specific application may not be satisfied. In a preferred embodiment of the present invention, the polyurethane reaction system comprising a specific content of the hydroxyl-free multifunctional (meth)acrylate and other components compatible thereto can extend the pot life and increase the linear shrinkage rate so that a preferred range satisfying certain requirements can be reached.

In embodiments of the present invention, the polyurethane reaction system further contains C) free radical reaction initiator. The free-radical initiator that is used in the present invention may be added to the polyol component or the isocyanate component, or can be added to both components. These initiators include, but are not limited to, peroxide, persulfide, peroxycarbonate, boric acid peroxide, azo compound, or other suitable free radical initiators that can initiate the curing of a double bond-containing compound. An example thereof includes tert-butyl peroxyisopropylcarbonate, tert-butyl peroxy-3,5,5-trimethylhexanoate, methylethyl ketone peroxide, and cumene hydroperoxide.

The content of the free-radical reaction initiator is usually 0.1-8 wt%, based on 100wt% of the total weight of the isocyanate-reactive component. In addition, an accelerator, such as a cobalt compound or an amine compound, may be present.

In embodiments of the present invention, the polyurethane reaction system may also contain a catalyst for catalyzing the reaction of an isocyanate group (NCO) and a hydroxyl group (OH). An appropriate catalyst for the polyurethane reaction is preferably, but not limited to an amine catalyst, an organometallic catalyst, or a mixture thereof. The amine catalyst is preferably, but not limited to triethylamine, tributylamine, triethylenediamine, N-ethylmorpholine, N,N,N',N'-tetramethyl-ethylene diamine, pentamethyldiethylene-triamine, N,N-methylaniline, N,N-dimethylaniline, or a mixture thereof. The organometallic catalyst is preferably, but not limited to an organotin-type compound, for example: tin (II) acetate, tin (II) octoate, tin ethylhexanoate, tin laurate, dibutyltin oxide, dibutyltin dichloride, dibutyltin diacetate, dibutyltin maleate, dioctyltin diacetate, or a mixture thereof. The used amount of the catalyst is 0.001-10 wt%, based on 100wt% of the total weight of the isocyanate-reactive component.

In embodiments of the present invention, the polyurethane reaction, i.e., the addition polymerization reaction between the isocyanate group and the hydroxyl group, wherein the isocyanate group can be an isocyanate group contained in the organic polyisocyanate (component A), or an isocyanate group contained in the intermediate product of the reaction of the organic polyisocyanate (component A) and the organic polyol (b1) component) or b2) component, the hydroxyl group can be a hydroxyl group contained in the organic polyol (b1) component) or b2) component, or a hydroxyl group contained in the intermediate product of the reaction of the organic polyisocyanate (component A) and the organic polyol (b1) component) or b2) component.

In embodiments of the present invention, the free-radical polymerization reaction is an addition polymerization reaction of olefinic bonds, wherein the olefinic bonds may be an olefinic bond contained in b2) component or an olefinic bond contained in the intermediate product of the reaction of b2) component and the organic polyisocyanate.

In embodiments of the present invention, the polyurethane addition polymerization reaction (i.e., the addition polymerization reaction between the isocyanate group and the hydroxyl group) and the free radical polymerization reaction coexist. As known to those skilled in the art, suitable reaction conditions can be selected to allow the polyurethane addition polymerization reaction and the free radical polymerization reaction to proceed successively, but the polyurethane matrix prepared in this way is structurally different from the polyurethane resin matrix prepared by allowing the polyurethane addition polymerization reaction and the free radical polymerization reaction to proceed simultaneously, so that the prepared polyurethane composites are different in mechanical properties and manufacturability.

In embodiments of the present invention, the above-mentioned polyurethane reaction system can also contain auxiliaries or additives comprising, but not limited to: filler, internal release agent, flame retardant, smoke suppressant, dye, pigment, antistatic agent, antioxidant, UV stabilizer, diluent, defoamer, coupling agent, surface wetting agent, leveling agent, water-removing agent, catalyst, molecular sieve, thixotropic agent, plasticizer, foaming agent, foam stabilizing agent, foam stabilizer, free radical reaction suppressant or a combination thereof, and these component may

be optionally contained in the isocyanate component A) and/or the isocyanate-reactive component B). These components can also be independently stored as component D) and, when used for preparing a polyurethane composite, are mixed with the isocyanate component A) and/or the isocyanate-reactive component B) before the preparation.

In some embodiments of the present invention, the filler is selected from: aluminum hydroxide, bentonite, pulverized fuel ash, wollastonite, perlite powder, hollow microsphere, calcium carbonate, talcum powder, mica powder, porcelain clay, fumed silica, expandable microsphere, diatomite, volcanic ash, barium sulfate, calcium sulfate, glass microsphere, stone powder, wood flour, wood chip, bamboo powder, bamboo chip, rice grain, straw chips, sorghum straw chips, graphite powder, metal powder, thermosetting composite recycled powder, plastic particle or powder, or a combination thereof. Among others, the glass microspheres can be solid or hollow.

The internal release agent that can be used in the present invention comprises any release agent conventionally used for producing polyurethanes, and examples thereof include long-chain carboxylic acids, particularly fatty acids such as stearic acid, amines of long-chain carboxylic acids such as stearic amide, fatty acid esters, metal salts of long-chain carboxylic acids such as zinc stearate, or polysiloxanes.

Examples of flame retardants that can be used in the present invention include triaryl phosphates, trialkyl phosphates, triaryl phosphates or trialkyl phosphates with halogen, melamine, melamine resins, halogenated paraffins, red phosphorus, or combinations thereof.

Other auxiliaries that can be used in the present invention include water-scavengers such as molecular sieves; defoamers such as polydimethyl siloxane; coupling agents such as mono(ethylene oxide) or organic amine functionalized trialkoxysilane or combinations thereof. Coupling agents are particularly preferably for improving the adhesion of the resin matrix to the fiber-reinforced material. Fine particle fillers, such as clay and fumed silica, are commonly used as thixotropic agent.

The free radical reaction suppressant that can be used in the present invention comprises a polymerization inhibitor and a polymerization retarder, and the like, for example, some phenols, quinone compounds or hindered amine compounds. Examples thereof include methyl hydroquinone, p-methoxyphenol, benzoquinone, polymethyl pyridine derivatives, low-valent copper ions, and the like.

III. Preparation of Polyurethane Composite

Another aspect of the present invention is to provide a process for preparing a polyurethane composite, wherein the polyurethane composite contains a polyurethane resin matrix and a reinforcing material, the process comprises a step of preparing the polyurethane resin matrix under such a reaction condition that the polyurethane reaction system is subjected to the free radical polymerization reaction and the reaction between the isocyanate group and the hydroxyl group simultaneously, wherein the polyurethane reaction system is described above.

In embodiments of the present invention, the polyurethane addition polymerization reaction (i.e., the addition polymerization reaction between the isocyanate group and the hydroxyl group) and the free radical polymerization reaction coexist.

The polyurethane composite of the present invention can be prepared by a polyurethane vacuum infusion process. The operation procedure for the polyurethane vacuum infusion process is well known to those skilled in the art, and for example, is described in the patent application CN1954995A, the entire content of which is incorporated herein by reference.

In the vacuum infusion process, one or more core materials are provided in a mould, and the core material is optionally covered wholly or partly by a reinforcing material. Then, a negative pressure is formed in the mould to perfuse the polyurethane resin into the mould; before curing, the polyurethane resin will wholly soak the reinforcing material and the core material will be wholly or partly soaked by the polyurethane resin. Then, under appropriate conditions, the polyurethane resin is allowed to simultaneously undergo the polyurethane addition polymerization reaction and the free-radical polymerization reaction, thereby curing the polyurethane resin to form a polyurethane resin matrix. In the above vacuum infusion process, the mould may be a mould commonly used in the art, and a person skilled in the art may select a suitable mould according to the desired properties and dimensions of the final product. In case of preparing a large article by using the vacuum infusion process, in order to ensure a sufficient pot-life, it is necessary to have the resin to keep a sufficiently low viscosity during the infusion to maintain good flowability. If the viscosity is higher than 600mPas, the resin viscosity is considered as being too high, the flowability becomes worse, and the resin is no longer suitable for the vacuum infusion process.

The core material is used together with the polyurethane resin matrix and the reinforcing material so as to facilitate the molding of the composite material and the reduction of the weight of the composite material. The core materials commonly used in the art can be used in the polyurethane composite of the present invention, and their examples include, but not limited to polystyrene foams, for example COMPAXX® foam; polyester PET foams; polyimide PMI foams; polyvinyl chloride foams; metal foams, such as those available from Mitsubishi; balsa wood; and the like.

Preferably, the polyurethane reaction system of the present invention is suitable for being used in the polyurethane vacuum infusion process to prepare the polyurethane composite, and has a relatively long pot-life, and the polyurethane composite prepared by the polyurethane vacuum infusion process has good mechanical properties, especially a relatively high heat-deflection temperature, so that the problem that the pot-life of the polyurethane reaction system and the heat-deflection temperature of the prepared polyurethane composite cannot be improved at the same time in the prior art is solved. These polyurethane composites can be used in the production of blades of wind-driven generators, enclosures for wind-driven generators, ship blades, ship shells, internal and external decorations and shells of vehicles, radar housings, structural part materials of mechanical equipment, and decorations and structural parts of buildings and bridges. The fan as mentioned in the present invention comprises a wind-driven generator, a turbo fan and the like.

The polyurethane composite of the present invention can also be prepared through the pultrusion process, the winding molding process, the hand lay-up molding process, the spray molding process or a combination thereof; and the detailed description of these processes can be found with reference to "Composite Material Technology and Apparatus" (Liu Xiongya et al., 1994, Wuhan University of Technology Press), chapters 2 and 6-9. The entire contents of the above disclosure are incorporated herein by reference.

The present invention will be further described with reference to the specific examples. It is to be understood, however, that these examples are illustrative only and are not to be construed to limit the scope of the present invention.

## Examples

The test methods for which no specific conditions are indicated in the following examples are generally based on conventional conditions or according to conditions recommended by the manufacturer. Unless otherwise stated, all percentages and parts are by weight.

Pbw, refers to the parts by weight of each component in the polyurethane reaction system;

Functionality, refers to the value determined according to the industry formula: functionality=hydroxyl value * molecular weight/56100; wherein the molecular weight is determined by the GPC high performance liquid chromatography;

Pot-life refers to the time from stirring the components of the reaction system uniformly until the viscosity of the mixture reaches 600 mPa·S. The pot-life can be measured in the following manner: Components of the polyurethane reaction system are thermostatically treated at 35°C respectively, and then mixed in the required proportion; the mixture is stirred for 1 minute until the mixture is mixed uniformly; under the temperature being maintained at 35°C, the viscosity of the mixture is measured once every 3 minutes, and the time required until the viscosity reaches 600 mPa·S is recorded as the pot-life. The viscometer is a product from Brook-Field Corporation, Model DV2TLTJ0.

Linear shrinkage rate refers to the linear shrinkage rate of a resin obtained from the reaction of a polyurethane reaction system measured according to test standard ISO 2577-2007. The specific method in the present invention can be as follows: the components of the polyurethane reaction system are prepared in proportion, the polyurethane reaction system is placed into a semi-cylinder mould which has been preheated to 35°C in an oven, the length of the liquid level in the semi-cylinder mould is recorded as h1, then the temperature is uniformly and slowly raised to 70°C within 2 hours, and then the temperature is constantly kept at 70°C for 4 hours. After cooling to room temperature (e.g., 25°C), the length h2 of the polyurethane resin is measured, and the linear shrinkage rate is determined and calculated as follows: (h1-h2)/h1×100%.

Isocyanate index, refers to a value calculated by the following formula:

Isocyanate index (%) = (mole number of isocyanate groups (NCO) in component A/mole number of isocyanate group-reactive groups in component B)×100%

The raw materials used in the examples are as follows:

Isocyanate: Desmodur 1511L, NCO wt%: 30.5-32.5 wt%, viscosity at 25°C: 160-240 mP.s, purchased from Covestro Polymers (China) Co., Ltd.;

Free-radical reaction initiator: t-butyl peroxybenzoate (TBPB), purchased from AkzoNobel;

Accelerator: NL-49P, purchased from AkzoNobel;

Polyol: propylene oxide-based polyether polyols, the starter is glycerol, functionality = 3, hydroxyl value 350 mgKOH/g, purchased from Covestro Polymers (China) Co., Ltd.;

Hydroxypropyl methacrylate (HPMA): purchased from Hersbit Chemical;

1,6-hexylene glycol diacrylate (HDDA): purchased from Aladdin;

Trimethylolpropane trimethacrylate (TMPTMA): purchased from Aladdin.

**Examples E1-4 and Comparative Example C1**

Preparation of a white material (component B): According to the component proportions in Table 1, the polyol, HPMA, NL-49P and HDDA were weighed, successively added to a plastic cup, stirred to become uniform, then placed into a 35°C oven and thermostatically treated.

Preparation of a black material (component A): According to the component proportions in Table 1, TBPB and 1511L were weighed, successively added to another plastic cup, stirred to become uniform, then also placed into a 35°C oven and thermostatically treated.

The black and white materials were quickly weighed according to the proportions in Table 1, placed in a new plastic cup, and quickly stirred to become uniform (the total weight of the black and white materials was 300 g). Then, the mixture was placed in a 35°C water-bath box, the change in viscosity along with the time and the temperature was monitored, and its pot-life was measured.

The linear shrinkage rate was measured according to the test standard ISO2577-2007 and the aforementioned steps.

The test results were shown in Table 1.

Table 1: Mass fractions of the components and test results of Examples E1-4 and Comparative Example C1 (unit: bpw for mass fraction)

| | C1 | E1 | E2 | E3 | E4 |
|---|---|---|---|---|---|
| Polyol | 60 | 60 | 60 | 60 | 60 |
| HPMA | 40 | 40 | 40 | 40 | 40 |
| NL-49P | 0.1 | 0.1 | 0.1 | 0.1 | 0.1 |
| HDDA | | 10 | 15 | 25 | 35 |
| | | | | | |
| 1511L | 87 | 87 | 87 | 87 | 87 |
| TBPB | 1.6 | 1.6 | 1.6 | 1.6 | 1.6 |
| | | | | | |
| Pot-life (35°C) | 67 | 85 | 99 | 126 | 155 |
| Linear shrinkage rate | 0.65% | 0.65% | 0.65% | 0.71% | 0.75% |

It could be seen from the experimental results of Table 1 that compared to Comparative Example 1, Examples 1-4 in which HDDA was added could significantly extend their pot-lifes and simultaneously could increase their linear shrinkage rates too. Based on different applications, the proper mass proportion of components could be selected to achieve the balance of the pot-life and the linear shrinkage rate so as to meet different requirements.

**Examples E5-8 and Comparative Example C1**

Preparation of a white material (component B): According to the component proportions in Table 2, the polyol, HPMA, NL-49P and TMPTMA were weighed, successively added to a plastic cup, stirred to become uniform, then placed into a 35°C oven and thermostatically treated.

Preparation of a black material (component A): According to the component proportions in Table 2, TBPB and 1511L were weighed, successively added to another plastic cup, stirred to become uniform, then also placed into a 35°C oven and thermostatically treated.

The black and white materials were quickly weighed according to the component proportions in Table 2, placed in a new plastic cup, and quickly stirred to become uniform (the total weight of the black and white materials was 300

g). Then, the mixture was placed in a 35°C water-bath box, the change in viscosity along with the time and the temperature was monitored, and its pot-life was measured.

The linear shrinkage rate was measured according to the test standard ISO2577-2007 and the aforementioned steps.

The test results were shown in Table 2.

Table 2: Test results of Examples E5-8 and Comparative Example C1

| | C1 | E5 | E6 | E7 | E8 |
|---|---|---|---|---|---|
| Polyol | 60 | 60 | 60 | 60 | 60 |
| HPMA | 40 | 40 | 40 | 40 | 40 |
| NL-49P | 0.1 | 0.1 | 0.1 | 0.1 | 0.1 |
| TMPTMA | | 10 | 15 | 25 | 35 |
| | | | | | |
| 1511L | 87 | 87 | 87 | 87 | 87 |
| Tc | 1.6 | 1.6 | 1.6 | 1.6 | 1.6 |
| | | | | | |
| Pot-life (35°C) | 67 | 82 | 82 | 99 | 110 |
| Linear shrinkage rate | 0.65% | 0.66% | 0.66% | 0.69% | 0.78% |

It could be seen from Table 2 that compared to Comparative Example 1, Examples 5-8 in which TMPTMA was added could significantly extend their pot-lifes and simultaneously could increase their linear shrinkage rates too. The proper mass proportion of components could be selected to achieve the balance of the pot-life and the linear shrinkage rate so as to meet different requirements.

## Claims

1. A polyol composition, comprising:

    b1) at least one polyol;
    b2) at least one compound having the structure of formula (I)

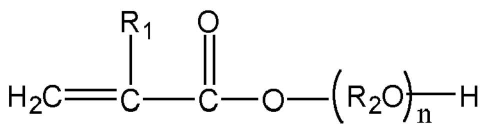

I ,

    wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;
    b3) at least one hydroxyl-free multifunctional (meth)acrylate.

2. The polyol composition according to claim 1, **characterized in that** said b3) component is selected from ethylene glycol di(meth)acrylate, propylene glycol di(meth)acrylate, butylene glycol di(meth)acrylate, 1,6-hexylene glycol di(meth)acrylate, diethylene glycol di(meth)acrylate, triethylene glycol di(meth)acrylate, dipropylene glycol di(meth)acrylate, tripropylene glycol di(meth)acrylate, trimethylolpropane tri(meth)acrylate, 1,2,3-glycerol tri(meth)acrylate, pentaerythritol tetra(meth)acrylate, or a combination thereof.

3. The polyol composition according to claim 1 or 2, **characterized in that** the content of said b3) component is 1.8-42

wt%, preferably 2.2-36.1 wt%, more preferably 2.47-20.1 wt%, particularly preferably 2.8-18.8 wt%, more particularly preferably 3.8-17.6 wt%, based on the total weight of the polyol composition.

4. A polyurethane reaction system, comprising:

Component A), comprising: at least one polyisocyanate;
Component B), comprising:

b1) at least one polyol;
b2) at least one compound having the structure of formula (I)

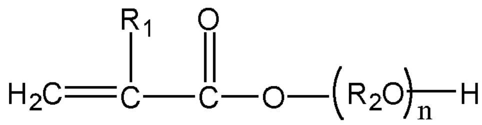

I ,

wherein, $R_1$ is selected from hydrogen, methyl or ethyl; $R_2$ is selected from an alkylene having 2-6 carbon atoms, 2,2-bis(4-phenylene)-propane, 1,4-bis(methylene)benzene, 1,3-bis(methylene)benzene, 1,2-bis(methylene)benzene; n is selected from an integral number of 1-6;
b3) at least one hydroxyl-free multifunctional (meth)acrylate; and

Component C), a free radical reaction initiator.

5. The polyurethane reaction system according to claim 4, **characterized in that** the content of said b3) component is 1-18 wt%, preferably 1.2-16 wt%, more preferably 1.3-9.6 wt%, particularly preferably 1.5-9 wt%, more particularly preferably 2-8.5 wt%, based on the total weight of the polyurethane reaction system.

6. The polyurethane reaction system according to claim 4 or 5, **characterized in that** the polyurethane reaction system has a pot-life at 35°C of ≥68 minutes, preferably ≥70 minutes, more preferably ≥72 minutes, particularly preferably ≥80 minutes.

7. The polyurethane reaction system according to any of claims 4-6, **characterized in that** compared to the pot-life at 35°C of a polyurethane reaction system without b3), the pot-life at 35°C of said polyurethane reaction system with b3) is increased by ≥5%, preferably ≥10%, more preferably ≥15%.

8. A polyurethane resin, obtained from the reaction of the polyurethane reaction system according to any of claims 4-7.

9. Use of the polyurethane reaction system according to any of claims 4-7 in manufacture of wind blades.

10. A process for preparing a polyurethane composite, which is to prepare the polyurethane composite by mixing the following components:

the polyurethane reaction system according to any of claims 4-7; and
at least one reinforcing material.

11. The process according to claim 10, **characterized in that** the polyurethane composite is prepared through pultrusion process, winding molding process, hand lay-up molding process, vacuum infusion process, spray molding process or a combination thereof, preferably through pultrusion process and/or vacuum infusion process.

12. The process according to claim 10 or 11, **characterized in that** the process comprises the coexistence of the free radical polymerization reaction and the addition polymerization reaction between isocyanate groups and hydroxyl groups.

13. The process according to any of claims 10-12, **characterized in that** the polyurethane reaction system has a pot-life at 35°C of ≥68 minutes, preferably ≥70 minutes, more preferably ≥72 minutes, particularly preferably ≥80 minutes.

**14.** A polyurethane composite obtained by the process for preparing a polyurethane composite according to any of claims 10- 13.

**15.** A polyurethane product, comprising the polyurethane resin of claim 8, **characterized in that** the polyurethane product is selected from cable trays, frames of doors, windows and curtain walls, frames of ladders, tent poles or pipes, anti-glare shields, floors, sucker rods, telegraph poles and cross arms, guardrails, grills, architectural sectional materials, container sectional materials and plates, bike racks, fishing rods, cable cores, insulator core rods, antenna housings, single-layer or sandwiched continuous plates, wind blades and parts thereof, enclosures for wind-driven generators, ship blades, ship shells, internal and external decorations and shells of vehicles, radar housings, structural part materials of mechanical equipment, decorations and structural parts of buildings and bridges, preferably wind blades or parts thereof, enclosures for wind-driven generators, more preferably blade shells, shear webs, spar caps, main spars, auxiliary spars and blade roots of wind blades.

Europäisches Patentamt
European Patent Office
Office européen des brevets

# EUROPEAN SEARCH REPORT

Application Number
EP 21 18 9449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/291168 A1 (PELLACANI LUIGI [IT] ET AL) 17 September 2020 (2020-09-17) * pages 4-6, paragraphs 40, 42-54, 60-63, 66; examples B, C, 2a, 3a; tables 1,2 * ----- | 1-15 | INV. C08G18/48 C08F283/00 C08F290/06 C08F290/14 C08G18/67 C08G18/76 C08L75/08 C08L75/14 |
| X | US 2020/172655 A1 (QIAN HUIFENG [US] ET AL) 4 June 2020 (2020-06-04) * pages 7-9, paragraphs 60-61, 69-84, 85-87; examples 1,2; table 1 * ----- | 1-15 | |
| X | WO 2018/219756 A1 (COVESTRO DEUTSCHLAND AG [DE]) 6 December 2018 (2018-12-06) * page 14, lines 1-37; pages 15-16, tables 1-2, ex.1-4, pages 18-20, claims 1-16; page 12, lines 3-34 * ----- | 1-15 | |
| | | | TECHNICAL FIELDS SEARCHED (IPC) |
| | | | C08G C09J C08F C08J C08L |

1 The present search report has been drawn up for all claims

| Place of search | Date of completion of the search | Examiner |
|---|---|---|
| Munich | 17 January 2022 | Stefaniu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 18 9449

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2022

| Patent document cited in search report | Publication date | Patent family member(s) | Publication date |
|---|---|---|---|
| US 2020291168 A1 | 17-09-2020 | BR 112018067643 A2 | 02-01-2019 |
| | | CN 109104865 A | 28-12-2018 |
| | | EP 3423508 A1 | 09-01-2019 |
| | | JP 2019510848 A | 18-04-2019 |
| | | KR 20180121545 A | 07-11-2018 |
| | | US 2020291168 A1 | 17-09-2020 |
| | | WO 2017151380 A1 | 08-09-2017 |
| US 2020172655 A1 | 04-06-2020 | CN 111065662 A | 24-04-2020 |
| | | EP 3673000 A1 | 01-07-2020 |
| | | JP 2020531644 A | 05-11-2020 |
| | | KR 20200045501 A | 04-05-2020 |
| | | US 2020172655 A1 | 04-06-2020 |
| | | WO 2019040596 A1 | 28-02-2019 |
| WO 2018219756 A1 | 06-12-2018 | CN 108929426 A | 04-12-2018 |
| | | WO 2018219756 A1 | 06-12-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 104031229 A
- CN 104974502 A
- CN 108727550 A
- CN 1954995 A


### Non-patent literature cited in the description


- Makromolekulare Stoffe. **HOUBEN WEYL.** Methoden der Organischen Chemie. Georg Thieme Verlag, 1963, vol. XIV/2, 17
- **LIU YIJUN.** Manual of Polyurethane Raw Materials and Additives. 01 April 2005
- **LIU HOUJUN.** Polyurethane Elastomer. August 2012
- **LIU XIONGYA et al.** Composite Material Technology and Apparatus. Wuhan University of Technology Press, 1994